# EUROPEAN PATENT SPECIFICATION

(11) **EP 2 683 008 B1**
(45) Date of publication and mention of the grant of the patent: **29.04.2015**
(21) Application number: 12305806.7
(22) Date of filing: 05.07.2012
(51) Int. Cl.: H01M 4/583, H01M 4/80, H01M 4/04, H01M 4/133, H01M 4/1393, H01M 4/06, H01M 4/66, H01M 6/14, H01M 4/08, H01M 6/16, H01M 4/02

(54) **Three dimensional positive electrode for LiCFx technology primary electrochemical generator**
Dreidimensionale positive Elektrode für elektrochemischen Primärgenerator mit LiCFx-Technologie
Électrode positive en trois dimensions pour générateur électrochimique primaire de technologie LiCFx

(43) Date of publication of application: 08.01.2014
(73) Proprietor: SAFT, 93170 Bagnolet (FR)
(72) Inventor: Bernard, Patrick, 33000 Bordeaux (FR); Simon, Bernard, 33320 Le Taillan Médoc (FR); Hilaire, Michel, 33160 St. Médard en Jalles (FR)
(74) Representative: Hirsch & Associés

(56) References cited:
- EP-A1- 2 439 007
- WO-A2-01/80621
- US-A1- 2011 244 305

## Description

### FIELD OF THE INVENTION

The invention relates to the technical field of the lithium primary electrochemical generators of the LiCFx type and more particularly the positive electrode which by convention we shall refer to hereinafter as the cathode of such generators.

### PRIOR ART

Primary electrochemical generators, i.e. non rechargeable electrochemical generators, of the LiCFx type (with x ≤ 1) are known. They generally comprise a positive electrode containing an electrochemically active material of the fluorinated carbon CFx type with x ≤ 1; a negative electrode (anode) containing a lithium compound and an electrolyte containing an organic solvent. The organic solvent can be a carbonate such as propylene carbonate or dimethyl carbonate, an ether such as dimethoxyethane, an ester or a lactone. A lithium salt, such as lithium perchlorate (LiClO₄) or lithium tetrafluoroborate (LiBF₄), is added to the solvent in order to constitute the electrolyte. A separator is inserted between each positive and negative electrode.

During discharge of the primary electrochemical generator, the following discharge reaction takes place: CFx + xLi -> xLiF + xC

To manufacture the positive electrode, one generally coats a current collector with a paste obtained by mixing the electrochemically active material CFx with an electrically conducting additive, a binder and an organic or an aqueous solvent. The current collector is generally a metal strip or a metal grid made of aluminum whose thickness ranges from 10 to 200 µm. The current collector is coated with the paste after which the coated current collector is dried to evaporate the solvent. After drying, the paste adheres to the current collector to constitute the electrode.

The electrochemically positive active material CFx is highly electrically insulating at the beginning of discharge of the generator (resistivity of 10¹¹ Ohm.cm). Moreover, it exhibits reaction kinetics limited by the charge transfer for a discharge at a low current but exhibits additional polarizations at higher discharge currents or for thicker electrodes. These additional polarizations are probably related to diffusional limitations and to poor homogeneity in the thickness of the electrode.

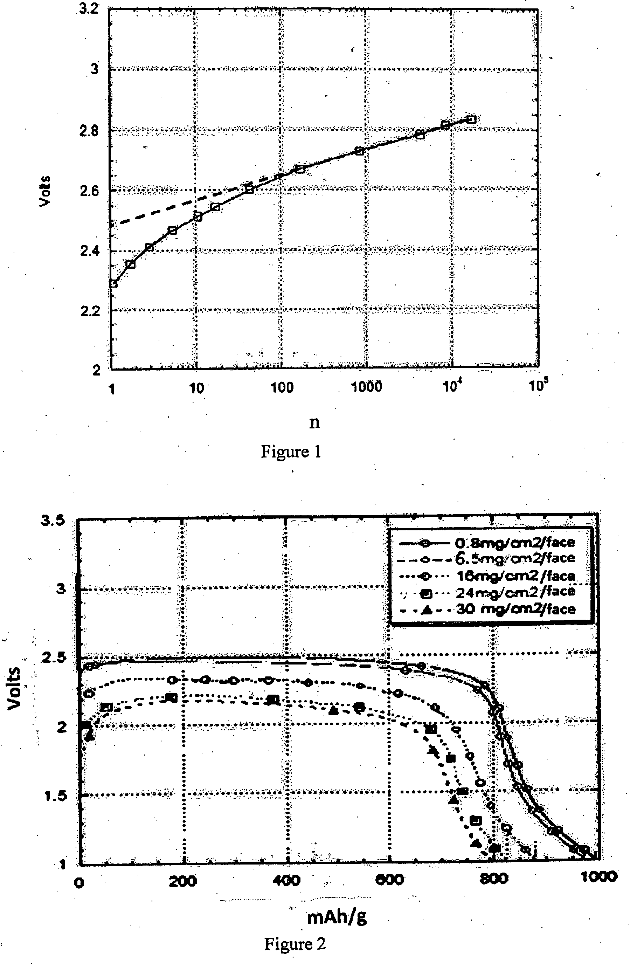

Figure 1 shows the evolution of the discharge voltage at room temperature of a thin electrode with respect to the discharge current. The electrode has an amount of electrochemically active material in grammes per square meter (hereinafter abbreviated "G.S.M.") of 1.58 mg/cm²/face. The discharge current is indicated by the ratio C/n where n indicates the duration of the discharge in hours and C is the rated capacity of the generator. The X-axis in figure 1 indicates the number n of hours of discharge. It is seen that the voltage during discharge decreases as the discharge current increases, i.e. when n decreases. For values of n lower than 20, the voltage strongly decreases and in a nonlinear manner with discharge current. Consequently, a disadvantage related to the electric insulating property of the CFx material is the difficulty in obtaining a generator delivering high power.

To compensate for this voltage drop, one can reduce the thickness of the electrode by reducing the amount of the electrochemically active material per electrode unit area, that is, by decreasing the grammes per square meter (G.S.M.). For high discharge currents (C/5 for example), the generator can function only with thin electrodes of low G.S.M. under penalty of reduced capacity or significant polarization. Figure 2 represents the discharge curves at a discharge current of C/10 for electrodes containing active material of the CFx type at room temperature. This figure shows that for G.S.M. of 0.8 and 6.5 mg/cm²/face, the voltage is approximately 2.5 V at half discharge. For G.S.M. of 16, 24 and 30 mg/cm²/face, the voltage at half discharge falls to approximately 2.35 and 2.2V respectively.

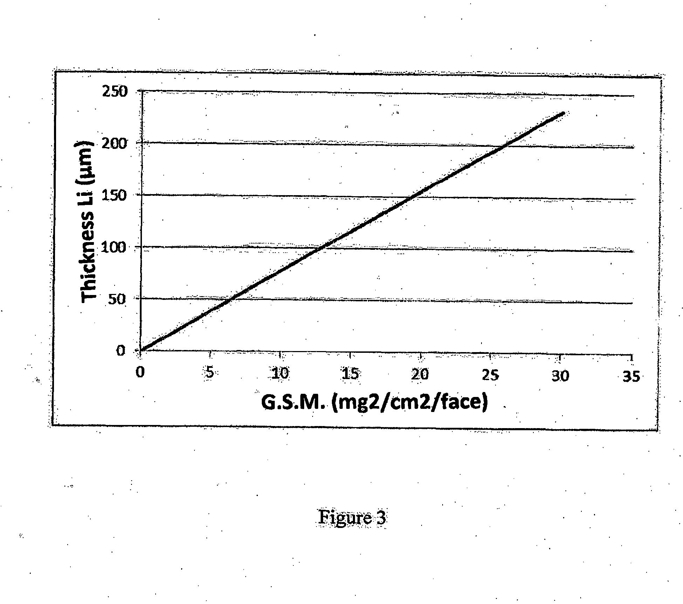

Thus, at a discharge current of C/10, the maximum usable G.S.M. is about 10 mg/cm²/face. Knowing that the gravimetric capacity of a material of the CFx type is about 800 mAh/g, the maximum areic capacity of the electrode is limited to 16 mAh/cm². The problems are then to balance the areic capacity of the positive electrode with the areic capacity of the negative electrode. The gravimetric capacity of lithium metal is 3.86 Ah/g, which corresponds for a density of 0.534 g/cm³ to a volumetric capacity of 2.06 Ah/cm³. For a one-to-one areic capacity ratio between the positive electrode and the negative electrode, the thickness of lithium necessary is consequently of 78 µm. However, such a thickness of lithium is extremely difficult to produce industrially, and leads to very high manufacturing costs. The minimal thickness usable in an industrial process with an acceptable cost is about 150 µm. Figure 3 shows, for various thicknesses of lithium of the negative electrode, the G.S.M. of paste coated on the corresponding positive electrode, for a areic capacity ratio of 1 to 1. This figure shows that a thickness of lithium strip of 150 µm corresponds to a G.S.M. of the positive electrode of 20 mg/cm²/face. However, such a high G.S.M. does not make it possible to obtain good performances at a high discharge current.

So, in order to design a primary generator of the LiCFx type able to be discharged at high currents (of the order of C/10-C/5), it is compulsory to have a high excess of lithium areic capacity with respect to the areic capacity of the CFx electrode (which can be up to a factor of 2 or more), which is expensive, pointless and leads to a reduction of the volumetric capacity and of the gravimetric capacity of the generator. This may also lead to safety problems when the generator is in a discharged state.

Electrochemical generators in which the current collector has a three dimensional structure are known in the art. A three dimensional current collector made of metal or carbon is particularly well suited as a support for an active material of the CFx fluorinated carbon type because it provides good adhesion and good electrical contact between the active material and the current collector. This avoids the need of using a high amount of an electron conducting additive, such as carbon black.

US patent application 2012/0041507A1 discloses the use of a three dimensional electrode made out of vitreous carbon for the manufacture of an electrochemical generator for a cardiac pacemaker. The electrodes are stacked to form a button cell. The use of a three dimensional current collector allows reducing the size of the cardiac pacemaker through an increase of energy density of the generator. Firstly, however, vitreous carbon has a poor plasticity, which makes the manufacture of a generator with a spiral assembly of the electrodes inconceivable. Such a generator would exhibit bad performances during discharge because of the mechanical constraints related to variations in density of the positive active material between the charged state and the discharged state. Secondly, this document does not address the problem of increasing the performances of a generator at a high discharge current considering the generator is used in a cardiac pacemaker intended to operate over a long period of time.

US patent application 2011/0244305A1 discloses a generator of the Li/CFₓ type operating up to 180°C and containing an ionic liquid as a solvent and an electrode having a current collector made up of a metal chosen from Ni, Ti, Al, Ag, Au, Pt, C, titanium-coated carbon, stainless steel and stainless steel coated with carbon. It discloses the use of an expanded metal or a foam on the surface of which the positive electrode would be pressed. It is said that the use of a foam allows an increase in electric conductivity with the active material. With such a technical solution, the current collector is either compressed mainly in the middle of the electrode where the two faces are pressed simultaneously, or asymmetrically in the thickness of the electrode. The material is pressed against only one face of the current collector. A significant quantity of active material is found at a significant distance from the current collector, which is detrimental to the electron conduction.

Patent JP 63276870 discloses the use of activated carbon fibers and of a porous metal layer made of aluminum or titanium at the surface of the positive electrode of a generator of the LiCFx type in order to increase the quantity of electrolyte in the generator and to limit voltage drop at the beginning of discharge.

None of the above cited documents addresses the problem of providing a primary electrochemical generator of the LiCFx type exhibiting both a high volumic energy and good performances during discharge at a high current.

Thus, there exists a need for a primary generator of the LiCFx type which exhibits high volumic energy as well as good performances during discharge at a high current.

### SUMMARY OF THE INVENTION

For this purpose, the invention provides an electrode comprising a current collector containing aluminum, having a three dimensional porous structure in which:
- certain pores of said porous structure are open; the average diameter of the open pores being greater than or equal to 50 µm and less than or equal to 250 µm;
- two contiguous open pores communicate by at least one opening the diameter of which being greater than or equal to 20 µm and less than or equal to 80 µm ;
said structure containing a mixture comprising:
a) at least one active material of the fluorinated carbon CFₓ type with x ranging between 0.5 and 1.2;
b) at least one electron conducting additive;
c) at least one binder.

According to one embodiment, the volume occupied by the open pores accounts for at least 60 % of the volume of the current collector, preferably at least 80 % of the volume of the current collector.

According to one embodiment, the electrode has a thickness ranging between 0.1 and 0.8 mm.

According to one embodiment, the ratio between the average diameter of the open pores and the average diameter of the openings connecting the pores is greater than 1.5.

According to one embodiment, the current collector has a surface weight greater than 0.7 g/dm².

According to one embodiment, the current collector has a surface weight lower than 6 g/dm².

According to one embodiment, the specific surface area of the active material of the fluorinated carbon CFx type measured by BET adsorption is from 50 to 400 m²/g.

According to one embodiment, the active material of the fluorinated carbon CFx type is in the form of particles having an average size of 2 to 30 µm.

According to one embodiment, the binder is selected from the group comprising polytetrafluoroethylene (PTFE), polyvinylidene fluoride (PVDF), fluorinated propylene and ethylene copolymer (FEP), polyhexafluoropropylene (PPHF), a polyimide, carboxymethylcellulose (CMC), hydroxyethylcellulose (HEC), hydroxypropylcellulose (HPC), hydroxypropylmethylcellulose (HPMC), polyacrylic acid (PAAc), xanthan gum, polyvinyl alcohol (PVA), polyvinyl butyral (PVB), poly (ethyleneoxide) (PEO), or a mixture thereof.

According to one embodiment, the binder is selected from the group comprising PVDF or a mixture of PTFE and PVA.

According to one embodiment, the conducting additive is selected from the group comprising carbon black, graphite, carbon fibers, carbon nanotubes.

According to one embodiment, the electrode comprises:
from 60 to 95 % of active material;
from 4 to 15 % of conducting additive;
from 1 to 15 % of binder.

According to one embodiment, the electrode comprises:
from 80 to 90 % of CF₁;
from 5 to 10 % of carbon particles;
from 5 to 10 % of binder.

According to one embodiment, the electrode comprises a first electrochemically active material CFx1 and a second electrochemically active material CFx2 with x1≠2 ; x1 and x2 ranging between 0.5 and 1.2.

According to one embodiment, the electrode comprises at least one electrochemically active material selected from MnO₂, FeS₂ and mixtures therof.

Another object of the invention is an electrochemical generator comprising:
- at least one negative electrode comprising a copper strip covered with an active material selected from the group comprising lithium metal and a lithium alloy of the LiM type, M being at least one element selected from the group comprising Mg, Al, Si, B, Ge and Ga;
- at least one positive electrode which is an electrode as described above.

Another object of the invention is a method for preparing an electrode comprising the steps of:
a) providing a current collector containing aluminum having a three dimensional porous structure in which:
   - certain pores of said porous structure are open; the average diameter of the open pores being greater than or equal to 50 µm and less than or equal to 250 µm;
   - two contiguous open pores communicate by an opening the average diameter of which is greater than or equal to 20 µm and less than or equal to 80 µm;
b) preparing a paste comprising an active material of the fluorinated carbon CFx type with x ranging from 0.5 to 1.2; an electron conducting additive and a binder;
c) coating the current collector with the paste ;
d) drying the electrode ;
e) rolling the electrode.

### DESCRIPTION OF THE DRAWINGS

Figure 1 shows the evolution of the discharge voltage of a thin electrode (1.58 mg/cm²/face) at room temperature as a function of a parameter n shown on the x-axis which is a function of the discharge current C/n.
Figure 2 shows the discharge curves at room temperature for electrodes containing an active material of the CFx type for a discharge current of C/10. The indicated G.S.M. correspond to the quantity of electrochemically active material deposited per unit of area and face.
Figure 3 shows the thickness of a lithium strip in µm as a function of the G.S.M. of the positive electrode in mg/cm²/face.
Figure 4 shows diagrammatically the three-dimensional porous structure of the current collector according to the invention.

### DETAILED EMBODIMENTS

The invention provides an electrode comprising a current collector containing aluminum. The current collector has a three-dimensional porous structure in which:
- certain pores of said structure are open; the average diameter of the open pores being greater than or equal to 50 µm and less than or equal to 250 µm;
- two contiguous open pores communicate by at least one opening the average diameter of which is greater than or equal to 20 µm and less than or equal to 80 µm;
said structure containing a mixture comprising:
a) at least one active material of the fluorinated carbon CFx type with x ranging between 0.5 and 1.2;
b) at least one electron conducting additive;
c) at least one binder.

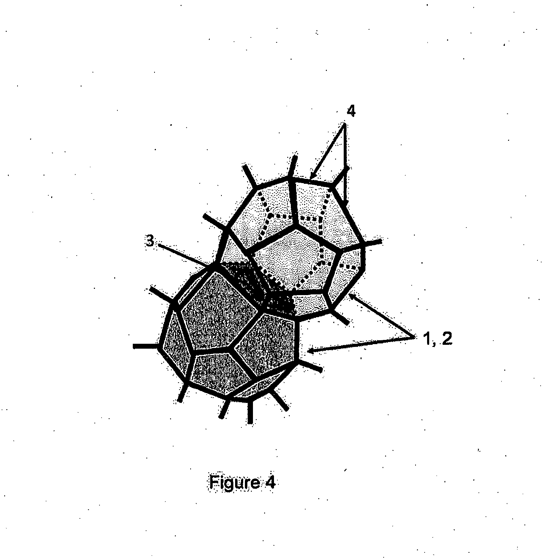

Figure 4 represents diagrammatically the three-dimensional porous structure of the current collector. Figure 4 shows two contiguous pores (1, 2) communicating one with the other. Each pore has a polyhedron shape, i.e. a three dimensional geometrical form having polygonal plane faces (3) which intersects at segments (4), which segments will be called hereinafter "strands". The two contiguous pores (1) and (2) have several strands in common.

The strands in common to two polyhedrons define an opening (3) which puts the volume of one of the two pores in communication with the volume of the contiguous pore. This opening constitutes a passage through which the paste circulates from one pore to another during the coating process. The passage allows homogeneous filling of the pores of the collector. The opening is similar to a plane surface the average diameter of which is greater than or equal to 20 µm and less or equal to 80 µm.

The pore structure was described in reference to a geometrical form of the polyhedral type but it is to be understood that the form of the pore is not limited to this geometry and can also be essentially spherical, ovoid or cylindrical. In the same way, the opening was described as being a plane surface consisting of a common polygonal plane face. However, the opening is not limited to a plane form but can also be three-dimensional. The diameter of a pore may be defined as the diameter of the sphere equivalent in volume. The diameter of an opening may be defined as the diameter of the circle equivalent in surface area. The average diameter of the pores is then the arithmetical mean of the diameters of all the pores of the porous structure. The average diameter of the openings is the arithmetical mean of the diameters of all the openings in the porous structure.

Typically, the thickness of the current collector ranges between 0.1 and 0.8 mm. The collector can be made of aluminum or of an alloy comprising mainly aluminum.

The surface weight of the current collector has an influence on the thickness of the strands of aluminum delimiting the pores and by consequence on the mechanical properties of the collector and on its electric conductivity. The surface weight generally lies between 0.7 and 6 g/dm². Below 0.7 g/dm², the rigidity of the current collector and its electrical conductivity can be insufficient for the required generator format. For example, resistance to stretching, tear strength and resistance to welding can become insufficient. Above 6 g/dm², the current collector may become too rigid and too expensive to manufacture.

In one preferred embodiment, the current collector has a thickness ranging between 0.1 and 0.8 mm and its surface weight ranges between 0.7 and 6 g/dm².

The current collector containing aluminum may be prepared by one of the following processes:
a) molten aluminum is poured into a vessel containing particles of a salt, such as sodium chloride. The melting point of aluminum is 660°C. The melting point of sodium chloride is 801 °C. The molten aluminum fills the interstitial spaces between the particles of salt. Vacuum may be applied to control the flow of molten aluminum. The particle size may be adjusted by successive sievings. After cooling the sample is cut out and the sodium chloride is dissolved in water. After drying the sample, the spaces occupied by the particles of salt are replaced by air. The porous metal is thus created.
b) a plastic foam, such as a polyurethane foam is provided. The plastic foam is coated with an electrically conducting additive, such as carbon or a metal. Then, aluminum is plated through an electrolytic process carried out in a molten salt. The diameter of the pores of the aluminum foam depends on the diameter of the pores of the plastic foam.
c) a plastic foam, such as a polyurethane foam is provided. The plastic foam is coated with an electrically conducting additive, such as carbon or a metal. A paste containing aluminum particles is plated over the plastic foam. The foam is then heat treated at a temperature of 650 °C in a non oxidizing atmosphere in order to eliminate the plastic foam and to sinter the particles of aluminum. The diameter of the pores of the aluminum foam depends on the diameter of the pores of the plastic foam.

One manufactures an electrode by coating the current collector with a paste (pasting) made up of a mixture which comprises essentially the positive active material, at least one electron conducting additive and a binder. The binder allows simultaneous obtaining of good adherence of the paste to the current collector once dried and good cohesion of the active material. In a first step, one typically fills the current collector with paste. Coating the composition in the three-dimensional structure can be done by immersing the current collector in a bath of paste. In a second step, coating is generally followed by a step of drying the electrode in order to evaporate the solvent which was used for preparing the paste. The step of drying is generally followed by a step of calendering (or rolling) which makes it possible to adjust the porosity of the electrode. During this last step, one for example brings the current collector between two rollers. The rollers exert on each face of the electrode a force directed according to the thickness of the current collector. During calendering, the elongation of the electrode is low, that is to say less than 5%. The compression leads to ovoid pores the diameter of which is reduced in the direction perpendicular to the length of the electrode. The dimension of the electrode remains substantially identical in the direction of the length of the electrode.

Finally, an electrical connection is fixed to the electrode, for example on either a non-coated portion of the electrode, or on a portion of the electrode which has been cleaned after the coating step.

It should be noted that the step of coating leads to an electrode the structure of which is different from that of an electrode comprising a collector having a two-dimensional structure. Indeed, when one pastes (or coats) a two-dimensional current collector, such as a metal strip which may have an open-work structure or not, the paste settles in the hollow parts of the collector and on the surface of the collector which are not open. The thickness of the electrode is thus greater than the thickness of the current collector since it is necessary to take into account the thickness of the paste above the surface of the current collector. However, in the invention, there is no thickness of paste above the surface of the current collector because the step of coating fills the pores with paste.

It should be noted that the features of the current collector, i.e. its thickness from 0.1 to 0.8 mm, the average diameter of the pores of 50 to 250 µm and the average diameter of the openings from 20 to 80 µm are those of the manufactured positive electrode which is ready to be stacked with a separator and a negative electrode in order to constitute an electrode plate set. They do not correspond to the current collector before coating. Indeed, both the step of coating and the step of calendering compress the current collector and thus reduce its thickness in a uniform manner.

The average diameter of the openings from 20 to 80 µm ensures a good filling of the current collector in relation to the features of the CFx active material and the conducting additive and ensures that the current collector exhibits good mechanical features during manufacture of the electrode and during the discharge process of the active material.

The sizes of the pores of the current collector have an influence both on the coating step and on the performance of the material at a high discharge current. Indeed, if the pores have an average diameter lower than 50 µm, the filling of the pores by the paste is only partial. If the pores have an average diameter greater than 250 µm, performance in discharge under high current is reduced because the average distance between the particles of active material and the current collector is too high.

We shall now describe the main components of the paste. The cathodic electrochemically active material is a fluorinated carbon of formula CFx with x ranging between 0.5 and 1.2, preferably between 0.8 and 1, in a proportion generally going from 60 to 95 % by weight of the mixture. Several CFx materials with different degrees of fluorination may be mixed. A fluorinated carbon has a very high gravimetric capacity which depends on the degree of fluorination of the carbon. The theoretical gravimetric capacity of CF₁ is 864 mAh/g and for an under-fluorinated carbon, its capacity is related linearly to the degree of fluorination. However, when the degree of fluorination in the fluorinated carbon is very close to 1, the electric conductivity of the material becomes very low because carbon fluoride CF₁ has insulating properties. It can thus be advantageous to use carbons referred to as "under-fluorinated" in order to obtain higher electric conductivities but at the expense of course of the gravimetric capacity of the active material.

Fluorinated carbon can derive from various precursors, such as petroleum coke, graphite, carbon fibers and carbon black. The discharge voltage of the generator depends among other parameters on the nature of the C-F chemical bond in the active material. Since the electrochemical discharge breaks a C-F chemical bond to form the LiF compound, the strength of the bond will induce a variation in discharge voltage. A weakening of the covalence of the C-F bond will require a lower energy for breaking the bond and consequently an increase in the discharge potential. Moreover, structural defects, such as CF₂ and CF₃ groups, at the edge of a graphitic plane obstruct the diffusion of lithium and/or fluoride ions. It is thus necessary to choose a fluorinated carbon compound having as few structural defects as possible and having a C-F bond of ionic character as much as possible. Preferably, the percentage of structural defects measured by solid state-nuclear magnetic resonance (SS-NMR) of carbon or fluorine or measured by infra-red spectroscopy (IR-ATR) is less than 5 %.

Preferably, the specific surface area of fluorinated carbon measured by BET adsorption is between 50 and 400 m²/g. Preferably, the average size DV50% of the fluorinated carbon particles is selected between 2 and 30 µm. DV50% is the diameter where 50 % by volume of the particles have a larger diameter, and the other 50 % in volume have a smaller diameter.

In one embodiment, the fluorinated carbon may be mixed with another electrochemically active compound such as for example manganese dioxide MnO₂ or FeS₂. Preferably, the proportion of manganese dioxide (MnO₂) or iron sulphide (FeS₂) in the electrode lies between 10 and 90 %. The discharge reaction of the fluorinated carbon being highly exothermic, it is advantageous in the case of high capacity generators to prepare positive electrodes containing a mixture of a fluorinated carbon and another electrochemically active material such as MnO₂ or FeS₂ in order to solve this technical problem.

The conducting additive may be selected from carbon black, graphite, carbon fibers, carbon nanotubes, or a mixture thereof in a proportion generally going from 4 to 15 wt%.

The binder can be a polymer or a mixture of polymers selected from polytetrafluoroethylene (PTFE), polyvinylidene fluoride (PVDF), a fluorinated propylene and ethylene copolymer (FEP), polyhexafluoropropylene (PPHF), a polyimide, carboxymethylcellulose (CMC), hydroxyethylcellulose (HEC), hydroxypropylcellulose (HPC), hydroxypropylmethylcellulose (HPMC), polyacrylic acid (PAAc), xanthan gum, polyvinyl alcohol PVA, polyvinyl butyral (PVB), poly (ethyleneoxide) (PEO), without this list being restrictive, in a proportion generally going from 1 to 10 wt%.

The negative electrode comprises as an active material a lithium-containing compound selected from lithium metal and a lithium-containing alloy of the LiM type, M being at least one element selected from the group comprising Mg, Al, Si, B, Ge and Ga. The active material is in the form of a metal strip on which a strip of current collector is fixed. One face of the metal strip may comprise several strips of current collector. A strip of current collector may be fixed at the metal strip by a lamination process. The current collector may be solid or have an openwork structure. The proportion that is open of the current collector can range from 0 to 95 %. The metal strip made of the lithium-containing compound and the current collector strip(s) is (are) of substantially identical lengths. The ratio of the widths of the strips of current collector to the width of the metal strip made of the lithium-containing compound may range from 0.2 to 1. The strip of current collector may be selected from the group comprising a perforated metal, an expanded metal, a grid, a metal tissue and is made of a material chosen from copper, stainless steel and nickel. One may use a metal lithium strip on which an openwork current collector strip is fixed as described in FR 2 935 544.

The organic solvent may be selected from a carbonate, an ether, an ester, a lactone or a mixture thereof. The carbonate can be propylene carbonate (PC), ethylene carbonate (EC), fluorinated ethylene carbonate (FEC), ethyl methyl carbonate (EMC), dimethyl carbonate (DMC), diethyl carbonate (DEC). The ether can be dimethyl ether (DME), tetrahydrofuran (THF), dioxolane. The lactone may be gamma-butyrolactone. The solvent may also be selected from dimethyl sulfide (DMS) or dimethylsulfoxide (DMSO).

The salt which is added to the organic solvent in order to constitute the electrolyte may be selected from lithium tetrafluoroborate (LiBF₄), lithium hexafluorophosphate (LiPF₆), lithium perchlorate (LiClO₄), lithium bis(fluorosulfonyl)imide Li(FSO₂)₂N (LiFSI), lithium bis(trifluoromethylsulfonyl) imide Li(CF₃SO₂)₂N (LiTFSI), lithium 4,5-dicyano-2-(trifluoromethyl) imidazolide (LiTDI), lithium bisoxalatoborate (LiBOB), lithium tris(pentafluoroethyl)trifluorophosphate LiPF₃(CF₂CF₃)₃ (LiFAP) or a mixture thereof.

According to one embodiment, it is also possible to use a ionic liquid with the above cited solvents and the above cited salts. The ionic liquid may be selected from 1-butyl 1-methyl pyrrolidinium bis(trifluoromethylsulfonyl)imide (BMP-TFSI), 1-butyl 1-methyl pyrrolidinium tris(pentafluoroethyl)trifluorophosphate (BMP-FAP), ethyl-(2-methoxyethyl) dimethyl ammonium bis(trifluoromethylsulfonyl)imide, 1-methyl 1-propyl piperidinium bis(trifluoromethylsulfonyl)imide, 1-methyl 1-propyl piperidinium bis(fluorosulfonyl)imide, 1-methyl 1-propyl pyrrolidinium bis(fluorosulfonyl)imide and mixtures thereof.

The separator may be made from the following materials polypropylene (PP), polyethylene (PE), polybutylene terephthalate (PBT), polyethylene terephthalate (PET), glass fibers, polyimide, cellulose in monolayers or in multi-layers of different natures.

In order to prepare the generator, one superimposes at least one positive electrode, one separator and at least one negative electrode to form an electrode plate set (or electrode plate group). The electrode plate set may be made up of a plane stacking of electrodes and separators and have the form of a parallelepiped. It may also be made up of a roll when the electrodes and separator are wounded in a spiral form. The electrode plate set is then introduced into a container the format of which is adapted to the form of the electrode plate set. The format of the container is generally parallelepipedic (prismatic) or cylindrical. The container is sealed using a lid. The lid is provided with an opening for the introduction of the electrolyte. The electrolyte is introduced into the container of the generator thanks to a vacuum generated in the container by an operator.

The generator according to the invention may be used in the aerospace field, for oil drilling at a high temperature and for military and civil applications.

### EXAMPLES

Primary electrochemical generators according to the prior art were produced according to the following procedure:
The positive electrodes have the following composition expressed as a percentage in weight with respect to the weight of the paste:
   - CF₁ 85 %, particles of average diameter 8 µm
   - PVDF 5 %
   - Carbon black 10 %

The current collector of the positive electrode is an aluminum strip of 20 µm on each face of which the desired quantity of active material was coated via the preparation of an "ink" containing N methyl pyrolidone (NMP). The various G.S.M. obtained are indicated in Table 1 for the series A to E. After drying, the electrode is calendered to adjust the porosity to 40 %.

A metal lithium strip is used as the negative electrode of the generator. One fixes on one face of the metal lithium strip a strip of current collector made of copper and a connection. The thickness of the negative lithium electrode is adjusted according to the G.S.M. of the positive electrode in such a way that the ratio of the areic capacity of the negative electrode to the areic capacity of the positive electrode is always equal to or greater than 1.

Primary electrochemical generators of the Li/CFx type having the standardized type D format are assembled using a positive electrode and a negative electrode as described above. The generators differ by the G.S.M. of positive active material coated on the aluminum current collector. The G.S.M. varies from 20 to 100 mg/cm². The electrodes are separated by a polypropylene separator having a thickness of 40 µm in order to form an electrode plate set. The electrode plate set thus wound is inserted into a metal container and is impregnated with a nonaqueous electrolyte made of lithium perchlorate salt LiClO₄ in a 40/60 mixture of PC/DME. The generator is thus obtained.

**Table 1**

| Series | G.S.M. of the positive electrode mg/cm² |
|---|---|
| A | 20 |
| B | 30 |
| C | 60 |
| D | 80 |
| E | 100 |

### Electrochemical performances:

The generators undergo a discharge at a current of 2 A at a temperature of 20 °C until a cut-off voltage of 1 V is reached. The generator capacity is measured at 2 V.

**Table 2**

| Series | A | B | C | D | E |
|---|---|---|---|---|---|
| Capacity at 20°C (Ah) | 16 | 18 | 15.5 | 14.2 | 8.3 |

Table 2 shows that when the G.S.M. of the positive electrode exceeds 30 mg/cm², that is to say exceeds 15 mg/cm²/face of paste, the capacity decreases. This is due to the fact that the increase in the G.S.M. leads to an increase of generator internal resistance. According to these results, one understands that with the technology of the prior art, it is impossible to make generators which can deliver both a high energy and a high power. When the G.S.M. of the positive electrode increases, it is possible to produce generators of higher volume energy, since the volume occupied by the current collector decreases for electrodes having a higher G.S.M. Accordingly, the positive electrode is shorter. Unfortunately, because of the limitations related to the CFₓ material, for a high G.S.M. of the positive electrode, like for the series C, D and E, the intrinsic performance of the material starts to drop and the capacity of the generator decreases.

Generators according to the invention were mounted according to the following procedure:
The positive electrodes have the following weight composition expressed as a percentage in weight compared to the weight of the paste.
   - CF₁ 85 %, particles of average diameter 8 µm
   - PTFE, PVA 5 %
   - Carbon black 10 %

A paste is prepared having the weight composition as described above and a mixture of water and polyvinyl alcohol (PVA) as follows:
A solution of PVA is prepared by adding 6 % in weight of PVA in water at a temperature of 80 °C while stirring during 5 hours. In this aqueous solution of PVA which accounts for 25 % of the weight of the other components, there are added in this order, carbon black, PTFE, fluorinated carbon, in order to obtain a paste having a viscosity ranging between approximately 800 and 5000 mPa.s⁻¹. This composition is then coated on a three-dimensional porous structure of aluminum having an initial thickness of 0.8 mm, a surface weight of 2.7 g/dm², a porosity of 84 %. The three-dimensional porous structure of aluminum is prelaminated to a variable thickness in order to obtain the desired quantity of active material in the electrode for the various series of Table 3. The average diameter of the pores of the electrodes obtained is 70 µm and the average diameter of the openings is 35 µm. The electrode then undergoes drying to evaporate solvent, here water, out of the paste, in a furnace operating at 150 °C then at 250 °C. The electrodes are then rolled to obtain a final porosity of 40 %. The final thickness lies between 145 and 640 µm depending on their G.S.M. After ultrasonic cleaning of the electrodes, a connection made of aluminium is welded to each electrode.

An electrode B" of the same G.S.M. as electrode B' was produced by preparing a solution of PVDF dissolved in solvent NMP instead of a solution of PVA dissolved in water and there was no addition of PTFE in the electrode.

The positive electrode B" has the following weight composition expressed as a percentage with respect to the weight of the paste:
- CF₁ 85 %, particles of average diameter 8 µm
- PVDF 5 %
- Carbon black 10 %
All the other manufacturing steps of the electrode are identical to those used for preparing electrodes A' to E'.

A lithium metal strip is used as the negative electrode of the generator. A current collector strip made of copper and a connection were fixed to a face of the lithium metal strip. The thickness of the negative lithium electrode was adapted to the G.S.M. positive electrode, in such a way that the ratio of areic capacity of the negative total to the areic capacity of the positive electrode is always equal to or greater than 1.

Primary electrochemical generators of the Li/CFx type having the standardized type D format are assembled using a positive electrode and a negative electrode as described above. The generators differ in the G.S.M. of positive active material coated on the aluminum current collector. The G.S.M. varies from 20 to 100 mg/cm². The electrodes are separated by a polypropylene separator having a thickness of 40 µm in order to form an electrode plate set. The electrode plate set thus wound is inserted into a metal container and it is impregnated with a nonaqueous electrolyte made of lithium perchlorate salt LiClO₄ in a 40/60 mixture of PC/DME.

**Table 3**

| Series | G.S.M. of the positive electrode mg/cm² |
|---|---|
| A' | 20 |
| B' | 30 |
| C' | 60 |
| D' | 80 |
| E' | 100 |
| B" | 30 |

### Electrochemical performance:

The generators undergo a discharge at a current of 2 A at a temperature of 20 °C until a cut-off voltage of 1 V is reached. The capacity is measured at 2 V.

**Table 4**

| Series | A' | B' | C' | D' | E' | B" |
|---|---|---|---|---|---|---|
| Capacity with 20°C (Ah) | 16 | 18 | 19.10 | 20.30 | 20.50 | 17.81 |

Table 4 shows that for G.S.M. greater than 30 mg/cm², that is greater than 15 mg/cm²/face, the capacity continues to increase whereas examples C, D and E according to the prior art show that for a G.S.M. greater than 30 mg/cm², the capacity starts to decrease. It is thus seen that the invention makes it possible to obtain a good capacity for high G.S.M. This is explained by a reduction of internal resistance made possible by the use of the current collector having a three-dimensional porous structure. The comparison between example B" and example B' shows that the nature of the binder does not have an influence on the capacity.

Generators F, G, H outside of the scope of the invention were produced.

A paste F having a composition identical to that of electrode C' was prepared. Then, this composition was coated on a three-dimensional porous structure of aluminum having an initial thickness of 0.8 mm, a surface weight of 2.7 g/dm², a porosity of 84 %, in order to obtain an electrode having an average pore diameter of 320 µm, the average diameter of the openings being 70 µm.

A paste G having a composition identical to that of electrode C" was prepared. Then, this composition was coated on a three-dimensional porous structure of aluminum having an initial thickness of 0.8 mm, a surface weight of 2.7 g/dm², a porosity of 84 %, in order to obtain an electrode having an average pore diameter of 70 µm, the average diameter of the openings being 15 µm.

A paste H having a composition identical to that of electrode C' was prepared. Then, this composition was coated in a three-dimensional porous structure of aluminum having an initial thickness of 0.8 mm, a surface weight of 2.7 g/dm², a porosity of 84 %, in order to obtain an electrode having an average pore diameter of 350 µm the average diameter of the openings being 120 µm.

The G.S.M. of electrodes F and H is identical to that of electrode C'. The G.S.M. of electrode G is 30 % lower than that of electrode C'.

All the other steps of manufacture of electrodes F, G, H and the generators are identical to those of series A' to E'.

### Electrochemical performances:

The generators underwent discharge at 2 A at 20 °C down to 1 V. Capacity was measured at 2 V.

**Table 5**

| Series | F | G | H |
|---|---|---|---|
| Capacity at 20 °C (Ah) | 18.2 | 12.7 | 4 |

The capacity of generator F is 18.2 Ah, which is less than the capacity of generator C which is 19.1 Ah. It is thus understood that when the average diameter of the pores of the three-dimensional structure is too high, the distance between the particles of CFx at the current collector becomes too high and the electrochemical performance is degraded.

The capacity of generator G is 12.7 Ah, which is less than the capacity of generator C' which is 19.1 Ah. It is thus understood that when the average diameter of the openings is too small, penetration of the paste into the electrode becomes difficult, and the quantity of active material is reduced. This results in degradation of electrochemical performance.

The capacity of generator H is 4 Ah, which is much lower than the capacity of generator C' which is 19.1 Ah. It is thus understood that when the average diameter of the openings is too large, variations in density of the materials during discharge of the generator are likely to generate high pressure within the support, possibly leading to expulsion of active material if its particles have a too low size in comparison with the average diameter of the openings. This probably leads to the presence of particles in the separator leading to micro shortcircuits between the positive electrode and the negative electrode, and consequently a reduced electrochemical performance.

## Claims

1. An electrode comprising a current collector containing aluminum, having a three dimensional porous structure in which:
- certain pores of said porous structure are open; the average diameter of the open pores being greater than or equal to 50 µm and less than or equal to 250 µm;
- two contiguous open pores communicate by at least one opening the diameter of which being greater than or equal to 20 µm and less than or equal to 80 µm ;
said structure containing a mixture comprising:
a) at least one active material of the fluorinated carbon CFx type with x ranging between 0.5 and 1.2;
b) at least one electron conducting additive;
c) at least one binder.

2. The electrode according to claim 1, in which the volume occupied by the open pores accounts for at least 60 % of the volume of the current collector, preferably at least 80 % of the volume of the current collector.

3. The electrode according to claim 1 or 2, having a thickness ranging between 0.1 and 0.8 mm.

4. The electrode according to one of claims 1 to 3, in which the ratio between the average diameter of the open pores and the average diameter of the openings connecting the pores is greater than 1.5.

5. The electrode according to one of the previous claims, in which the current collector has a surface weight greater than 0.7 g/dm².

6. The electrode according to one of the previous claims, in which the current collector has a surface weight lower than 6 g/dm².

7. The electrode according to one of the previous claims, in which the specific surface area of the active material of the fluorinated carbon CFx type measured by BET adsorption is from 50 to 400 m²/g.

8. The electrode according to one of the previous claims, in which the active material of the fluorinated carbon CFx type is in the form of particles having an average size of 2 to 30 µm.

9. The electrode according to one of the previous claims, in which the binder is selected from the group comprising polytetrafluoroethylene (PTFE), polyvinylidene fluoride (PVDF), fluorinated propylene and ethylene copolymer (FEP), polyhexafluoropropylene (PPHF), a polyimide, carboxymethylcellulose (CMC), hydroxyethylcellulose (HEC), hydroxypropylcellulose (HPC), hydroxypropylmethylcellulose (HPMC), polyacrylic acid (PAAc), xanthan gum, polyvinyl alcohol (PVA), polyvinyl butyral (PVB), poly(ethyleneoxide) (PEO), or a mixture thereof.

10. The electrode according to the claim 9, in which the binder is selected from the group comprising PVDF or a mixture of PTFE and PVA.

11. The electrode according to one of the previous claims, in which the conducting additive is selected from the group comprising carbon black, graphite, carbon fibers, carbon nanotubes.

12. The electrode according to one of the previous claims comprising:
from 60 to 95% of active material;
from 4 to 15% of conducting additive;
from 1 to 15% of binder.

13. The electrode according to the claim 12 comprising:
from 80 to 90% of CF₁;
from 5 to 10% of carbon particles;
from 5 to 10% of binder.

14. The electrode according to one of the preceding claims, comprising a first electrochemically active material CFx1 and a second electrochemically active material CFx2 with x1≠x2 ; x1 and x2 ranging between 0.5 and 1.2.

15. Electrode according to one of the preceding claims, comprising at least one electrochemically active material selected from MnO₂, FeS₂ and mixtures therof.

16. An electrochemical generator comprising:
- at least one negative electrode comprising a copper strip covered with an active material selected from the group comprising lithium metal and a lithium alloy of the LiM type, M being at least one element selected from the group comprising Mg, Al, Si, B, Ge and Ga;
- at least one positive electrode which is an electrode according to one of claims 1 to 15.

17. A method for preparing an electrode comprising the steps of:
a) providing a current collector containing aluminum having a three dimensional porous structure in which:
- certain pores of said structure are open; the average diameter of the open pores being greater than or equal to 50 µm and less than or equal to 250 µm;
- two contiguous open pores communicate by an opening the average diameter of which is greater than or equal to 20 µm and less than or equal to 80 µm;
b) preparing a paste comprising an active material of the fluorinated carbon CFx type with x ranging from 0.5 to 1.2; an electron conducting additive and a binder;
c) coating the current collector with the paste ;
d) drying the electrode ;
e) rolling the electrode.

## Patentansprüche

1. Elektrode, welche einen Aluminium enthaltenden Stromkollektor umfasst, der eine dreidimensionale poröse Struktur aufweist, wobei:
- gewisse Poren der porösen Struktur offen sind; wobei der mittlere Durchmesser der offenen Poren größer oder gleich 50 µm und kleiner oder gleich 250 µm ist;
- zwei aneinander angrenzende offene Poren durch mindestens eine Öffnung kommunizieren, deren Durchmesser größer oder gleich 20 µm und kleiner oder gleich 80 µm ist;
wobei die Struktur eine Mischung enthält, welche umfasst:
a) mindestens ein aktives Material des Typs von fluoriertem Kohlenstoff CFx, mit x im Bereich zwischen 0,5 und 1,2;
b) mindestens einen elektronenleitenden Zusatzstoff;
c) mindestens ein Bindemittel.

2. Elektrode nach Anspruch 1, wobei auf das von den offenen Poren eingenommene Volumen mindestens 60 % des Volumens des Stromkollektors, vorzugsweise mindestens 80 % des Volumens des Stromkollektors entfallen.

3. Elektrode nach Anspruch 1 oder 2, welche eine Dicke im Bereich zwischen 0,1 und 0,8 mm aufweist.

4. Elektrode nach einem der Ansprüche 1 bis 3, wobei das Verhältnis zwischen dem mittleren Durchmesser der offenen Poren und dem mittleren Durchmesser der die Poren verbindenden Öffnungen größer als 1,5 ist.

5. Elektrode nach einem der vorhergehenden Ansprüche, wobei der Stromkollektor ein Flächengewicht aufweist, das größer als 0,7 g/dm² ist.

6. Elektrode nach einem der vorhergehenden Ansprüche, wobei der Stromkollektor ein Flächengewicht aufweist, das niedriger als 6 g/dm² ist.

7. Elektrode nach einem der vorhergehenden Ansprüche, wobei die spezifische Oberfläche des aktiven Materials des Typs von fluoriertem Kohlenstoff CFx, gemessen durch BET-Messung, 50 bis 400 m²/g beträgt.

8. Elektrode nach einem der vorhergehenden Ansprüche, wobei das aktive Material des Typs von fluoriertem Kohlenstoff CFx die Form von Teilchen mit einer mittleren Größe von 2 bis 30 µm aufweist.

9. Elektrode nach einem der vorhergehenden Ansprüche, wobei das Bindemittel aus der Gruppe ausgewählt ist, welche Polytetrafluorethylen (PTFE), Polyvinylidenfluorid (PVDF), fluoriertes Ethylen-Propylen-Copolymer (FEP), Polyhexafluorpropylen (PPHF), ein Polyimid, Carboxymethylcellulose (CMC), Hydroxyethylcellulose (HEC), Hydroxypropylcellulose (HPC), Hydroxypropylmethylcellulose (HPMC), Polyacrylsäure (PAAc), Xanthangummi, Polyvinylalkohol (PVA), Polyvinylbutyral (PVB), Poly(ethylenoxide) (PEO) oder eine Mischung davon umfasst.

10. Elektrode nach Anspruch 9, wobei das Bindemittel aus der Gruppe ausgewählt ist, welche PVDF oder eine Mischung von PTFE und PVA umfasst.

11. Elektrode nach einem der vorhergehenden Ansprüche, wobei der leitende Zusatzstoff aus der Gruppe ausgewählt ist, welche Ruß, Graphit, Kohlefasern, Kohlenstoffnanoröhrchen umfasst.

12. Elektrode nach einem der vorhergehenden Ansprüche, welche umfasst:
60 bis 95 % aktives Material;
4 bis 15 % leitenden Zusatzstoff;
1 bis 15 % Bindemittel.

13. Elektrode nach Anspruch 12, welche umfasst:
80 bis 90 % CF₁;
5 bis 10 % Kohlenstoffteilchen;
5 bis 10 % Bindemittel.

14. Elektrode nach einem der vorhergehenden Ansprüche, welche ein erstes elektrochemisch aktives Material CFx1 und ein zweites elektrochemisch aktives Material CFx2 mit x1≠x2 umfasst, wobei x1 und x2 im Bereich zwischen 0,5 und 1,2 liegen.

15. Elektrode nach einem der vorhergehenden Ansprüche, welche mindestens ein elektrochemisch aktives Material umfasst, das aus MnO₂, FeS₂ und Mischungen davon ausgewählt ist.

16. Elektrochemischer Generator, welcher umfasst:
- mindestens eine negative Elektrode, die einen Kupferstreifen umfasst, der mit einem aktiven Material bedeckt ist, das aus der Gruppe ausgewählt ist, welche Lithiummetall und eine Lithiumlegierung des Typs LiM umfasst, wobei M wenigstens ein Element ist, das aus der Gruppe ausgewählt ist, welche Mg, Al, Si, B, Ge und Ga umfasst;
- mindestens eine positive Elektrode, welche eine Elektrode nach einem der Ansprüche 1 bis 15 ist.

17. Verfahren zur Herstellung einer Elektrode, welches die folgenden Schritte umfasst:
a) Bereitstellen eines Aluminium enthaltenden Stromkollektors, der eine dreidimensionale poröse Struktur aufweist, wobei:
- gewisse Poren der porösen Struktur offen sind; wobei der mittlere Durchmesser der offenen Poren größer oder gleich 50 µm und kleiner oder gleich 250 µm ist;
- zwei aneinander angrenzende offene Poren durch eine Öffnung kommunizieren, deren Durchmesser größer oder gleich 20 µm und kleiner oder gleich 80 µm ist;
b) Herstellen einer Paste, die ein aktives Material des Typs von fluoriertem Kohlenstoff CFx, mit x im Bereich zwischen 0,5 und 1,2; einen elektronenleitenden Zusatzstoff und ein Bindemittel umfasst;
c) Beschichten des Stromkollektors mit der Paste;
d) Trocknen der Elektrode;
e) Walzen der Elektrode.

## Revendications

1. Electrode comprenant un collecteur de courant contenant de l'aluminium, qui a une structure poreuse tridimensionnelle dans laquelle :
- certains pores de ladite structure poreuse sont ouverts ; le diamètre moyen des pores ouverts étant supérieur ou égal à 50 µm et inférieur ou égal à 250 µm,
- deux pores ouverts contigus communiquent grâce à au moins une ouverture dont le diamètre est supérieur ou égal à 20 µm et inférieur ou égal à 80 µm ;
ladite structure contenant un mélange comprenant :
a) au moins une matière active du type fluorocarbone CFₓ, x étant compris entre 0,5 et 1,2 ;
b) au moins un additif conducteur d'électrons ;
c) au moins un liant.

2. Electrode selon la revendication 1, dans laquelle le volume occupé par les pores ouverts constitue au moins 60 % du volume du collecteur de courant, de préférence au moins 80 % du volume du collecteur de courant.

3. Electrode selon la revendication 1 ou 2, ayant une épaisseur comprise entre 0,1 et 0,8 mm.

4. Electrode selon l'une des revendications 1 à 3, dans laquelle le rapport entre le diamètre moyen des pores ouverts et le diamètre moyen des ouvertures reliant les pores est supérieur à 1,5.

5. Electrode selon l'une des revendications précédentes, dans laquelle le collecteur de courant a un poids surfacique supérieur à 0,7 g/dm².

6. Electrode selon l'une des revendications précédentes, dans laquelle le collecteur de courant a un poids surfacique inférieur à 6 g/dm².

7. Electrode selon l'une des revendications précédentes, dans laquelle l'aire surfacique spécifique de la matière active du type fluorocarbone CFₓ mesurée par adsorption BET va de 50 à 400 m²/g.

8. Electrode selon l'une des revendications précédentes, dans laquelle la matière active du type fluorocarbone CFₓ se présente sous la forme de particules ayant une taille moyenne de 2 à 30 µm.

9. Electrode selon l'une des revendications précédentes, dans laquelle le liant est choisi dans le groupe constitué par le polytétrafluoroéthylène (PTFE), le fluorure de polyvinylidène (PVDF), le copolymère de propylène et d'éthylène fluoré (FEP), le polyhexafluoropropylène (PPHF), un polyimide, la carboxyméthylcellulose (CMC), l'hydroxyéthylcellulose (HEC), l'hydroxypropylcellulose (HPC), l'hydroxypropylméthylcellulose (HPMC), l'acide polyacrylique (PAAc), la gomme xanthane, l'alcool polyvinylique (PVA), le polyvinylbutyral (PVB), le poly(oxyéthylène) (PEO), ou un mélange de ceux-ci.

10. Electrode selon la revendication 9, dans laquelle le liant est choisi dans le groupe constitué par le PVDF ou un mélange de PTFE et de PVA.

11. Electrode selon l'une des revendications précédentes, dans laquelle l'additif conducteur est choisi dans le groupe constitué par le noir de carbone, le graphite, les fibres de carbone, les nanotubes de carbone.

12. Electrode selon l'une des revendications précédentes, comprenant :
de 60 à 95 % de matière active ;
de 4 à 15 % d'additif conducteur ;
de 1 à 15 % de liant.

13. Electrode selon la revendication 12, comprenant :
de 80 à 90 % de CF₁ ;
de 5 à 10 % de particules de carbone ;
de 5 à 10 % de liant.

14. Electrode selon l'une des revendications précédentes, comprenant une première matière électrochimiquement active CFx1 et une deuxième matière électrochimiquement active CFx2 avec x1≠x2 ; x1 et x2 étant compris entre 0,5 et 1,2.

15. Electrode selon l'une des revendications précédentes, comprenant au moins une matière électrochimiquement active choisie parmi MnO₂, FeS₂ et des mélanges de ceux-ci.

16. Générateur électrochimique, comprenant :
- au moins une électrode négative comportant une bande de cuivre couverte par une matière active choisie dans le groupe constitué par le lithium métallique et un alliage de lithium de type LiM, M étant au moins un élément choisi dans le groupe constitué par Mg, Al, Si, B, Ge et Ga ;
- au moins une électrode positive qui est une électrode selon l'une des revendications 1 à 15.

17. Procédé de préparation d'une électrode comprenant les étapes consistant à :
a) fournir un collecteur de courant contenant de l'aluminium, qui a une structure poreuse tridimensionnelle dans laquelle :
- certains pores de ladite structure poreuse sont ouverts ; le diamètre moyen des pores ouverts étant supérieur ou égal à 50 µm et inférieur ou égal à 250 µm ;
- deux pores ouverts contigus communiquent grâce à au moins une ouverture dont le diamètre est supérieur ou égal à 20 µm et inférieur ou égal à 80 µm ;
b) préparer une pâte comprenant une matière active du type fluorocarbone CFₓ, x étant compris entre 0,5 et 1,2 ; un additif conducteur d'électrons et un liant ;
c) revêtir le collecteur de courant avec la pâte ;
d) sécher l'électrode ;
e) laminer l'électrode.
